(19) Europäisches Patentamt
European Patent Office
Office européen des brevets

(11) EP 3 030 588 B1

(12) # FASCICULE DE BREVET EUROPEEN

(45) Date de publication et mention de la délivrance du brevet:
**28.03.2018 Bulletin 2018/13**

(21) Numéro de dépôt: **14741250.6**

(22) Date de dépôt: **11.07.2014**

(51) Int Cl.:
***C08C 19/25*** *(2006.01)* ***B60C 1/00*** *(2006.01)*
***C08C 19/44*** *(2006.01)* ***C08L 15/00*** *(2006.01)*

(86) Numéro de dépôt international:
**PCT/EP2014/064980**

(87) Numéro de publication internationale:
**WO 2015/018600 (12.02.2015 Gazette 2015/06)**

(54) **ELASTOMÈRE DIÉNIQUE MODIFIÉ PAR COUPLAGE PORTEUR DE FONCTIONS SILANOL, SON PROCÉDÉ DE SYNTHÈSE ET COMPOSITION DE CAOUTCHOUC LE COMPRENANT**

MODIFIZIERTES DIENELASTOMER DURCH KUPPLUNG MIT SILANOLFUNKTIONEN, SYNTHESEVERFAHREN DAFÜR KAUTSCHUKZUSAMMENSETZUNG DAMIT

DIENE ELASTOMER MODIFIED BY COUPLING HAVING SILANOL FUNCTIONS, SYNTHESIS METHOD FOR SAME AND RUBBER COMPOSITION COMPRISING IT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.08.2013 FR 1357889**

(43) Date de publication de la demande:
**15.06.2016 Bulletin 2016/24**

(73) Titulaire: **Compagnie Générale des Etablissements Michelin**
**63000 Clermont-Ferrand (FR)**

(72) Inventeurs:
- **DIRE, Charlotte**
  **F-63040 Clermont-Ferrand Cedex 9 (FR)**
- **MARECHAL, Jean-Marc**
  **F-63040 Clermont-Ferrand Cedex 9 (FR)**
- **DORATO, Margarita**
  **F-63040 Clermont-Ferrand Cedex 9 (FR)**

(74) Mandataire: **Le Cam, Véronique Marie Christine**
**Manufacture Française des Pneumatiques Michelin**
**23 Place des Carmes-Déchaux**
**SGD/LG/PI - F35 - Ladoux**
**63040 Clermont-Ferrand Cedex (FR)**

(56) Documents cités:
**EP-A1- 1 398 347 FR-A1- 2 915 202**
**FR-A1- 2 930 554**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 030 588 B1

## Description

La présente invention est relative à un élastomère diénique modifié comprenant un groupement porteur d'une fonction comprenant un atome de silicium majoritairement hydrolysée en silanol et d'une fonction amine tertiaire ainsi qu'un procédé de synthèse de cet élastomère diénique. La présente invention concerne également une composition de caoutchouc renforcée, utilisable notamment pour la fabrication de pneumatiques, comprenant cet élastomère diénique modifié.

Depuis que les économies de carburant et la nécessité de préserver l'environnement sont devenues une priorité, il est souhaitable de produire des mélanges possédant de bonnes propriétés mécaniques et une hystérèse aussi faible que possible afin de pouvoir les mettre en oeuvre sous forme de compositions de caoutchouc utilisables pour la fabrication de divers produits semi-finis entrant dans la composition de pneumatiques.

Pour atteindre l'objectif de baisse d'hystérèse, de nombreuses solutions ont déjà été expérimentées. En particulier, on peut citer la modification de la structure des polymères et des copolymères diéniques au moyen d'agents de fonctionnalisation dans le but d'obtenir une bonne interaction entre le polymère ainsi modifié et la charge, qu'il s'agisse du noir de carbone ou d'une autre charge renforçante.

Parmi de nombreuses modifications d'élastomères diéniques, il a notamment été proposé d'améliorer les propriétés des compositions de caoutchouc en utilisant des élastomères fonctionnalisés par une fonction silanol.

Les demandes de brevet EP 0 778 311 A1, EP 0 786 493 A1, EP 0 877 047 A1 ont décrit une composition de caoutchouc renforcée utilisant respectivement à titre de charge renforçante, de la silice, du noir de carbone et du noir de carbone ayant de la silice fixée sur sa surface, à base d'un polymère diénique fonctionnalisé en extrémité de chaîne par une fonction silanol ou un bloc polysiloxane ayant au moins une extrémité silanol ou un polymère diénique fonctionnalisé le long de sa chaîne par des fonctions silanols.

Dans la demande de brevet EP2139703, il est proposé un élastomère fonctionnel de distribution monomodale des masses moléculaires en nombre des chaînes, possédant une fonction silanol située essentiellement en milieu de chaîne. Cet élastomère fonctionnel procure à une composition le contenant un compromis mise en oeuvre à cru / hystérèse amélioré notamment par rapport à un élastomère essentiellement fonctionnalisé en extrémité de chaîne par une fonction silanol.

Il a également été proposé de combiner la fonctionnalisation des élastomères diéniques en associant à une fonction silanol, une autre fonction. Ainsi, la demande de brevet WO 2009077837 A1 décrit un élastomère fonctionnalisé à une extrémité de chaîne par une fonction silanol, l'autre extrémité de chaîne portant une fonction amine.

Par ailleurs, la demande de brevet EP 2 266 819 A1 propose, en vue de ses propriétés d'atténuation de l'échauffement et sa synthèse limitant la production de composés volatiles organiques, un élastomère diénique fonctionnalisé en extrémité de chaîne par une fonction silanol porteuse d'une fonction favorisant la liaison entre la fonction silanol de l'élastomère et la charge renforçante au sein d'une composition de caoutchouc. Néanmoins, il apparaît que certains élastomères diéniques modifiés par un groupement possédant à la fois une fonction amine et une fonction silanol posent des problèmes d'évolution des macrostructures notamment lors du stockage, ce qui conduit à une dégradation des propriétés potentiellement intéressantes de ces élastomères. Tout particulièrement, il s'avère que certains élastomères diéniques fonctionnalisés en extrémité de chaîne par une fonction silanol porteuse d'une fonction amine conduisent à de fortes évolutions de viscosité Mooney.

Le problème d'évolution de macrostructure lors de la synthèse ou du stockage d'élastomères diéniques modifiés est connu notamment en lien avec des élastomères modifiés comportant des fonctions alcoxysilanes.

De nombreux travaux se sont attachés à la stabilisation du Mooney lors de la synthèse de ce type d'élastomère modifié et lors de leur stockage. À titre illustratif, on peut citer le brevet EP 0 801 078 B1 revendiquant l'ajout d'un acide carboxylique à la solution d'élastomère, avant l'étape de stripping, afin de neutraliser la basicité apportée par l'amorceur de polymérisation anionique et minimiser l'hydrolyse des groupements alcoxysilane. Dans le brevet EP 1 198 506 B1, il est proposé d'ajouter un composé du type alkyl alcoxysilane ($R^1_nSi(OR^2)_{4-n}$) dans la solution d'élastomère, avant l'étape de stripping, avec un ratio molaire $n(R^1_nSi(OR^2)_{4-n})/n(\text{Polymère-SiOR'})$ élevé (20/1) afin de favoriser la réaction entre l'alkyl alcoxysilane et une partie du polymère qui se trouve sous sa forme totalement ou partiellement hydrolysée, Polymère-SiOH, au stripping. Enfin, on peut citer le brevet EP 1 237 934 B1 qui décrit l'ajout d'un alcool à chaîne longue dans la solution d'élastomère, avant l'étape de stripping, afin de minimiser les réactions d'hydrolyse au stripping et par conséquent la formation de liaisons Si-O-Si lors du stockage.

Néanmoins, ces procédés ne s'inscrivent pas dans la démarche initiée dans la demande de brevet EP 2 266 819 A1 de minimiser l'impact du procédé de synthèse sur l'émission de composés organiques volatiles.

Le problème que se propose de résoudre la présente invention est de fournir un élastomère diénique modifié dont les propriétés de mise en oeuvre sont stabilisées. Notamment il est un objet de l'invention de proposer un élastomère diénique modifié subissant une évolution significativement réduite de la viscosité Mooney notamment pendant la période de stockage, simple à synthétiser et qui conserve des caractéristiques intéressantes pour une utilisation dans la fabrication de pneumatiques contribuant notamment à la diminution de la résistance au roulement.

Le problème technique est résolu en ce que l'invention propose un élastomère diénique modifié par couplage au moyen d'un agent porteur d'au moins une fonction amine tertiaire et une fonction hydrolysable en silanol, l'atome de silicium liant les deux chaînes élastomères. En effet, cet élastomère diénique modifié, porteur d'une fonction comprenant un atome de silicium majoritairement hydrolysée en silanol et d'une fonction amine tertiaire, présente une stabilité au stockage significativement améliorée puisqu'on n'observe pas d'évolution de la viscosité Mooney au cours d'une période de stockage d'au moins cent trente jours. Cet élastomère peut être synthétisé selon un procédé qui après polymérisation comprend une étape d'hydrolyse en vue d'hydrolyser tout ou partie des fonctions hydrolysables en silanol. Un tel mode de synthèse est divulgué dans la demande de brevet EP 2 266 819 A1 qui le décrit en outre comme limitant l'émission de composés organiques volatiles.

L'invention a donc pour objet un élastomère diénique modifié comprenant majoritairement l'espèce couplée par un groupement porteur d'une fonction comprenant un atome de silicium majoritairement hydrolysée en silanol et d'une fonction amine tertiaire, ledit groupement étant lié à l'élastomère diénique par l'intermédiaire de l'atome de silicium.

L'invention a également pour objet un procédé de synthèse dudit élastomère diénique modifié.

Un autre objet de l'invention est une composition de caoutchouc renforcée à base au moins d'une charge renforçante et d'une matrice élastomère comprenant au moins ledit élastomère diénique modifié.

Dans la présente description, sauf indication expresse différente, tous les pourcentages (%) indiqués sont des % en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Il convient de préciser qu'il est connu de l'homme du métier que lorsqu'on modifie un élastomère par réaction d'un agent de fonctionnalisation sur l'élastomère vivant issu d'une étape de polymérisation anionique, on obtient un mélange d'espèces modifiées de cet élastomère dont la composition dépend notamment de la proportion de sites réactifs de l'agent de fonctionnalisation par rapport au nombre de chaînes vivantes. Ce mélange comprend des espèces fonctionnalisées en bout de chaîne, couplées, étoilées et/ou non fonctionnalisées.

Dans la présente description, on entend par "espèce couplée" ou "élastomère couplé" par un groupement porteur d'une fonction comprenant un atome de silicium majoritairement hydrolysée en silanol et d'une fonction amine tertiaire, un élastomère diénique possédant le groupement en question au sein de sa chaîne élastomère, l'atome de silicium de ce groupement liant les deux morceaux de la chaîne de l'élastomère diénique. On dit que l'élastomère est couplé ou encore fonctionnalisé en milieu de chaîne, par opposition à la position "en bout de chaîne" et bien que le groupement ne se situe pas précisément au milieu de la chaîne élastomère.

Dans la présente demande, par « majoritairement » ou « majoritaire » en liaison avec un composé, on entend que ce composé est majoritaire parmi les composés du même type dans la composition, c'est-à-dire que c'est celui qui représente la plus grande fraction pondérale parmi les composés du même type. Ainsi, par exemple, un élastomère majoritaire est l'élastomère représentant la plus grande fraction pondérale par rapport au poids total des élastomères dans la composition. De la même manière, une charge dite majoritaire est celle représentant la plus grande fraction pondérale par rapport au poids totale de l'ensemble des charges de la composition. Egalement, une espèce fonctionnelle d'un élastomère diénique modifié dite majoritaire est celle représentant la plus grande fraction pondérale parmi les espèces fonctionnalisées constituant l'élastomère diénique, par rapport au poids total de l'élastomère diénique modifié. Dans un système comprenant un seul composé d'un certain type, celui-ci est majoritaire au sens de la présente invention.

Par l'expression composition "à base de" en liaison avec une composition, il faut entendre que la composition comprend, de manière non limitative, le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation.

Ainsi, l'invention a pour objet un élastomère diénique modifié comprenant majoritairement l'espèce couplée par un groupement porteur d'une fonction comprenant un atome de silicium majoritairement hydrolysée en silanol et d'une fonction amine tertiaire lié, à l'élastomère diénique par l'intermédiaire de l'atome de silicium. Préférentiellement, l'élastomère diénique modifié comprend au moins 50% en poids, plus préférentiellement au moins 70% en poids de l'espèce couplée par rapport au poids total de l'élastomère diénique modifié.

On entend par « fonction comprenant un atome de silicium majoritairement hydrolysée en silanol », une fonction hydrolysable en silanol dont au moins 50% du nombre total de fonctions hydrolysables sont hydrolysées en silanol, soit une fonction hydrolysable en silanol hydrolysée à au moins 50% molaire.

Par élastomère diénique, doit être compris de manière connue un (on entend un ou plusieurs) élastomère issu au moins en partie (i.e., un homopolymère ou un copolymère) de monomères diènes (monomères porteurs de deux doubles liaisons carbone-carbone, conjuguées ou non). Plus particulièrement, par élastomère diénique, on entend tout homopolymère obtenu par polymérisation d'un monomère diène conjugué ayant 4 à 12 atomes de carbone, ou tout copolymère obtenu par

copolymérisation d'un ou plusieurs diènes conjugués entre eux ou avec un ou plusieurs composés vinylaromatiques ayant de 8 à 20 atomes de carbone. Dans le cas de copolymères à base de composés vinylaromatiques, ceux-ci contiennent de 20 % à 99 % en poids d'unités diéniques, et de 1 à 80 % en poids d'unités vinylaromatiques.

A titre de diènes conjugués utilisables dans le procédé conforme à l'invention conviennent notamment le butadiène-1,3, le 2-méthyl-1,3-butadiène, les 2,3 di(alcoyle en C1 à C5)-1,3-butadiène tels que par exemple le 2,3-diméthyl-1,3-butadiène, 2,3-diéthyl-1,3-butadiène, 2-méthyl-3-éthyl-1,3-butadiène, le 2-méthyl-3-isopropyl-1,3-butadiène, le phényl-1,3-butadiène, le 1,3-pentadiène, le 2,4 hexadiène, etc.

A titre de composés vinylaromatiques conviennent notamment le styrène, l'ortho-, méta, para-méthylstyrène, le mélange commercial "vinyltoluène", le para-tertiobutylstyrène, les méthoxystyrènes, le vinylmésitylène, le divinylbenzène, le vinylnaphtalène, etc. L'élastomère diénique de la composition conforme à l'invention est choisi préférentiellement dans le groupe des élastomères diéniques fortement insaturés constitué par les polybutadiènes (BR), les polyisoprènes (IR) de synthèse, les copolymères de butadiène, les copolymères d'isoprène et les mélanges de ces élastomères. De tels copolymères sont plus particulièrement des copolymères de butadiène-styrène (SBR), des copolymères d'isoprène-butadiène (BIR), des copolymères d'isoprène-styrène (SIR) et des copolymères d'isoprène-butadiène-styrène (SBIR). Parmi ces copolymères, les copolymères de butadiène-styrène (SBR) sont particulièrement préférés.

Selon une mise en oeuvre de l'invention, l'espèce couplée de l'élastomère diénique modifié peut être représentée par la formule 1 :

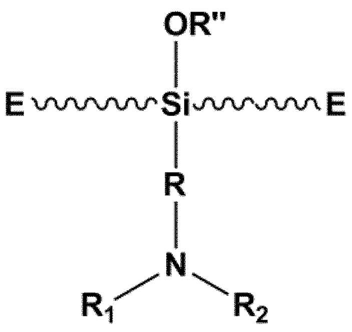

Formule 1

dans laquelle,

- le symbole E désigne un élastomère diénique,
- R est un groupement hydrocarboné divalent, linéaire ou ramifié, alkylène en $C_1$ - $C_{10}$, arylène en $C_6$ - $C_{18}$ ou aralkylène en $C_7$ - $C_{18}$, de préférence un radical alkylène en $C_1$ - $C_{10}$, plus préférentiellement un radical alkylène linéaire en $C_3$,
- $R_1$ et $R_2$, identiques ou différents, représentent un radical alkyl en $C_1$- $C_{18}$, voire $C_1$- $C_{10}$, de préférence alkyle en $C_1$-$C_4$, notamment méthyle ou éthyle, plus préférentiellement un radical méthyle, ou alors $R_1$ et $R_2$ forment avec N auquel ils sont liés un hétérocycle contenant un atome d'azote et au moins un atome de carbone, de préférence de 2 à 6 atomes de carbone ;
- -OR" représente une fonction alcoxy, hydrolysée à au moins 50%, de préférence au moins 80%, plus préférentiellement 100%, le radical alkyl comprenant 1 à 5 atomes de carbone, de préférence 1 ou 2.

Ainsi, selon une variante préférentielle de l'invention, 100% des fonctions hydrolysables en silanol sont hydrolysées et l'espèce couplée de l'élastomère diénique modifié peut être représentée par la formule 1b :

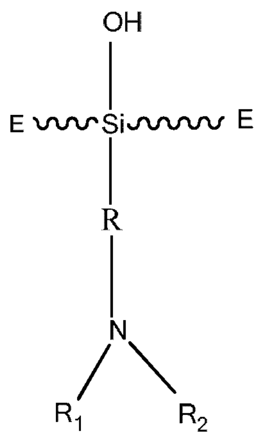

Formule 1b

dans laquelle E, R, $R_1$ et $R_2$ sont tels que définis plus haut.

L'élastomère diénique modifié selon l'invention, peut être préparé selon un procédé incluant la modification de l'élastomère par réaction d'un élastomère diénique vivant sur un agent de fonctionnalisation approprié, c'est-à-dire toute molécule au moins difonctionnelle en vue de coupler, la fonction étant tout type de groupement chimique connu par l'homme de l'art pour réagir avec un bout de chaîne vivant. Un tel procédé fait également l'objet de l'invention.

Selon un procédé de synthèse, l'élastomère diénique modifié peut être obtenu par la mise en oeuvre des étapes suivantes:

- polymérisation anionique d'au moins un monomère diène conjugué en présence d'un initiateur de polymérisation,
- modification de l'élastomère diénique vivant porteur d'un site actif obtenu à l'étape précédente par un agent de fonctionnalisation, susceptible de coupler les chaînes élastomères, porteur d'au moins une fonction hydrolysable en silanol et une fonction amine tertiaire, avec un rapport molaire de l'agent de

fonctionnalisation à l'initiateur de polymérisation d'une valeur allant de 0,35 et 0,65,

- l'hydrolyse de l'élastomère modifié obtenu à l'étape précédente.

En tant qu'initiateur de polymérisation, on peut utiliser tout initiateur anionique monofonctionnel connu. Toutefois un initiateur contenant un métal alcalin tel que le lithium est utilisé à titre préférentiel. Des composés représentatifs sont les organolithiens aliphatiques tels que l'éthyllithium, le n-butyllithium (n-BuLi), l'isobutyllithium, les amidures de lithium obtenus à partir d'une amine secondaire cyclique, telle que la pyrrolidine et l'hexaméthylèneimine.

La polymérisation est de préférence effectuée en présence d'un solvant hydrocarboné inerte qui peut être par exemple un hydrocarbure aliphatique ou alicyclique comme le pentane, l'hexane, l'heptane, l'iso-octane, le cyclohexane, le méthylcyclohexane ou un hydrocarbure aromatique comme le benzène, le toluène, le xylène.

La polymérisation peut être effectuée en continu ou en discontinu. On effectue généralement la polymérisation à une température comprise entre 20 °C et 150 °C et de préférence voisine de 30 °C à 110 °C.

L'élastomère diénique peut avoir toute microstructure qui est fonction des conditions de polymérisation utilisées. L'élastomère peut être à blocs, statistiques, séquencés, microséquencés, etc... et être préparé en dispersion ou en solution. La microstructure de cet élastomère peut être déterminée par la présence ou non d'un agent modifiant et/ou randomisant et les quantités d'agent modifiant et/ou randomisant employées.

La deuxième étape du procédé selon l'invention consiste en la modification de l'élastomère diénique vivant, obtenu à l'issue de l'étape de polymérisation anionique, selon des conditions opératoires favorisant la réaction de couplage de l'élastomère diénique par un agent de fonctionnalisation approprié. Cette étape conduit à la synthèse d'un élastomère diénique modifié comprenant majoritairement l'espèce couplée. Ok Ainsi, la réaction de modification de l'élastomère diénique vivant, obtenu à l'issue de la première étape, peut se dérouler à une température comprise entre - 20°C et 100 °C, par addition sur les chaînes polymères vivantes ou inversement, d'un agent de fonctionnalisation non polymérisable susceptible de former un groupement porteur d'une fonction hydrolysable en silanol et d'une fonction amine tertiaire, liant deux chaînes élastomères par son atome de silicium. Cet agent de fonctionnalisation non polymérisable permet notamment d'obtenir les structures de formule 1 plus haut. Il s'agit particulièrement d'un agent de fonctionnalisation porteur d'au moins une fonction hydrolysable en silanol et deux fonctions réactives avec l'élastomère vivant, chacune de ces deux fonctions étant directement liée à l'atome de silicium, ainsi qu'une fonction amine tertiaire.

Il peut s'agir par exemple d'un composé porteur d'un groupement de type -$Si(OR)_3$, R étant un radical alkyle hydrolysable en $C_1$-$C_5$, préférentiellement en $C_1$-$C_2$, et d'une fonction amine tertiaire ou encore d'un composé porteur d'une fonction -$SiX_3$, les substituants X désignant, indépendamment les uns des autres, un groupement -OR, R étant un alkyle en $C_1$-$C_5$, préférentiellement $C_1$-$C_2$, ou un halogène, plus particulièrement Cl, et d'une fonction amine tertiaire.

Ainsi, selon une variante du procédé de l'invention, l'agent de fonctionnalisation répond à la formule 2:

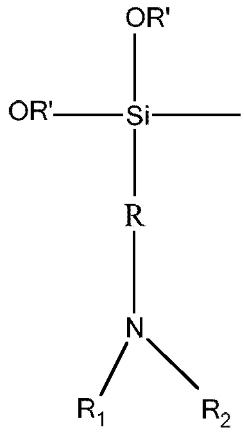

Formule 2

dans laquelle,

- R est un groupement hydrocarboné divalent, linéaire ou ramifié, alkylène en $C_1$-$C_{10}$, arylène en $C_6$-$C_{18}$ ou aralkylène en $C_7$-$C_{18}$, de préférence un radical alkylène en $C_1$-$C_{10}$, plus préférentiellement un radical alkylène linéaire en $C_3$,

- $R_1$ et $R_2$, identiques ou différents, représentent un radical alkyl en $C_1$-$C_{18}$, voire $C_1$-$C_{10}$, de préférence alkyle en $C_1$-$C_4$, notamment méthyle ou éthyle, plus préférentiellement un radical méthyle, ou alors $R_1$ et $R_2$ forment avec N auquel ils sont liés un hétérocycle contenant un atome d'azote et au moins un atome de carbone, de préférence de 2 à 6 atomes de carbone,

- les radicaux R', substitués ou non substitués, identiques ou différents entre eux, représentent un groupe alkyle en $C_1$-$C_5$, de préférence un groupe alkyle en $C_1$-$C_2$.

On peut citer par exemple à titre d'agent de fonctionnalisation répondant à la formule 2, les N,N-dialkylaminopropyltrialcoxysilanes, Les substituants alkyle de ces agents sont linéaires ou ramifiés et possèdent généralement de 1 à 18 atomes de carbone, voire de 1 à 10, préférentiellement de 1 à 4, voire méthyle et éthyle, plus préférentiellement méthyle. Les substituants alcoxy sont linéaires ou ramifiés et possèdent généralement de 1 à 5 atomes de carbone, de préférence de 1 à 2.

Préférentiellement, l'agent de fonctionnalisation est choisi parmi le 3-(N,N-dimethylaminopropyl)trimethoxysilane, le 3-(N,N-dimethylaminopropyl)triethoxysilane, le 3-(N,N-diethylaminopropyl)trimethoxysilane, le 3-(N,N-diethylaminopropyl)triethoxysilane, le 3-(N,N-dipropylaminopropyl)trimethoxysilane, le 3-(N,N-dipropylaminopropyl)triethoxysilane, le 3-(N,N-dibutylaminopropyl)trimethoxysilane, le 3-(N,N-dibutylaminopropyl)triethoxysilane, le 3-(N,N-dipentylaminopropyl)trimethoxysilane, le 3-(N,N-dipentylaminopropyl)triethoxysilane, le 3-(N,N-dihexylaminopropyl)trimethoxysilane, le 3-(N,N-dihexylaminopropyl)triethoxysilane, le 3-(hexamethyleneiminopropyl)trimethoxysilane, le 3-(hexamethyleneiminopropyl)triethoxysilane. Plus préférentiellement encore l'agent de fonctionnalisation est le 3-(N,N-dimethylaminopropyl)trimethoxysilane.

Selon une autre variante du procédé de l'invention, l'agent de fonctionnalisation est un composé porteur d'une fonction $-SiX_3$, X étant un halogène, notamment Br et Cl, plus particulièrement Cl, et d'une fonction amine tertiaire dont les substituants alkyle sont linéaires ou ramifiés et possèdent généralement de 1 à 18 atomes de carbone, voire de 1 à 10, de préférence de 1 à 4, voire méthyle et éthyle, plus préférentiellement méthyle.

On peut citer par exemple à titre d'agent de fonctionnalisation de cette autre variante le 3-(N,N-dimethylaminopropyl)trichlorosilane, le 3-(N,N-dipropylaminopropyl)triethoxysilane, le 3-(N,N-diethylaminopropyl)trichlorosilane, le 3-(N,N-dibutylaminopropyl)trichlorosilane, le 3-(N,N-dipentylaminopropyl)trichlorosilane, le 3-(N,N-dihexylaminopropyl)trichlorosilane, le 3-(hexamethyleneiminopropyl)trichlorosilane.

Le rapport molaire entre l'agent de fonctionnalisation et le métal de l'initiateur des chaînes polymères vivantes est de 0,35 à 0,65, préférentiellement de 0,40 à 0,60 et encore plus préférentiellement de 0,45 à 0,55.

Le temps de réaction entre le polymère diénique vivant et l'agent de fonctionnalisation peut être compris entre 10 secondes et 2 heures.

L'étape de modification de l'élastomère diénique vivant est suivie selon l'invention par une étape d'hydrolyse, susceptible d'hydrolyser tout ou au moins 50% des fonctions hydrolysables en silanol portées par l'élastomère diénique modifié. Préférentiellement, au moins 80% des fonctions sont hydrolysées, plus préférentiellement encore 100%.

La réaction d'hydrolyse de l'élastomère modifié obtenu à l'étape précédente peut être réalisée par tout moyen connu. Notamment, l'hydrolyse est réalisée en présence d'eau en conditions acide, neutre ou basique. L'eau est utilisée en excès par rapport à l'amorceur de la polymérisation (rapport molaire supérieur à 1). Le temps d'hydrolyse peut être compris entre 10 secondes et quelques heures. Dans le cas d'une hydrolyse réalisée en conditions acide et permettant d'atteindre des taux d'hydrolyse d'au moins 80%, préférentiellement 100%, des composés du type acide inorganique (acide chlorhydrique, acide sulfurique, acide nitrique par exemple), acide carboxylique (acide formique ou acide acétique par exemple), tétrachlorure de titane ou tétrachlorure de silicium peuvent être ajoutés. Dans le cas d'une hydrolyse réalisée en conditions basique et permettant d'atteindre des taux d'hydrolyse d'au moins 80%, préférentiellement 100%, des composés du type hydroxyde de métal alcalin (hydroxyde de sodium ou hydroxyde de potassium par exemple) peuvent être ajoutés.

Selon une variante du procédé de l'invention, celui-ci peut comprendre, préalablement à l'étape de modification de l'élastomère par l'agent de fonctionnalisation porteur d'au moins une fonction hydrolysable en silanol et une fonction amine tertiaire, une étape de modification par réaction avec un agent d'étoilage ou de couplage connu en soi, par exemple à base d'étain ou de silicium. Cette variante est avantageusement mise en oeuvre afin de diminuer le fluage à cru de l'élastomère diénique modifié selon l'invention.

Du fait de l'effet reconnu des fonctions qu'il porte sur l'hystérèse de compositions de caoutchouc, ainsi que de sa mise en oeuvre à cru améliorée, l'élastomère diénique modifié selon l'invention est avantageusement utilisé dans des compositions de caoutchouc notamment destinées à la fabrication de pneumatiques. Ainsi, un autre objet de l'invention est une composition de caoutchouc renforcée à base d'au moins une charge renforçante et une matrice élastomère comprenant au moins un élastomère diénique modifié tel que décrit plus haut.

La composition de caoutchouc renforcée selon l'invention peut se présenter à l'état réticulé ou à l'état non réticulé, autrement dit réticulable.

Il doit être entendu que la composition de caoutchouc peut comprendre un ou plusieurs de ces élastomères diéniques modifiés selon l'invention.

L'élastomère diénique modifié comprenant majoritairement l'élastomère couplé par un groupement porteur d'une fonction comprenant un atome de silicium majoritairement hydrolysée en silanol et d'une fonction amine tertiaire, lié à l'élastomère diénique par l'intermédiaire de l'atome de silicium, peut être, selon différentes variantes de l'invention, utilisé seul dans la composition ou en coupage avec au moins un autre élastomère diénique conventionnel, qu'il soit étoilé, couplé, fonctionnalisé ou non. Préférentiellement, cet autre élastomère diénique utilisé dans l'invention est choisi dans le groupe des élastomères diéniques fortement insaturés constitué par les polybutadiènes (en abrégé "BR"), les polyisoprènes (IR) de synthèse, le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR). On peut également envisager un coupage avec tout élastomère synthétique autre que diénique, voire avec tout polymère autre qu'élastomère, par exemple un polymère thermoplastique.

Selon une variante de l'invention, la composition de caoutchouc renforcée est à base d'une matrice élastomère comprenant à titre majoritaire (c'est-à-dire que la fraction pondérale est la plus élevée par rapport au poids total de la matrice élastomère) l'élastomère diénique modifié comprenant majoritairement l'espèce couplée par un groupement porteur d'une fonction comprenant un atome de silicium majoritairement hydrolysée en silanol et d'une fonction amine tertiaire lié à l'élastomère diénique par l'intermédiaire de l'atome de silicium. Lorsque l'élastomère conventionnel utilisé en coupage est du caoutchouc naturel et/ou un ou plusieurs polymères diéniques comme par exemple les polybutadiènes, les polyisoprènes, les copolymères butadiène- styrène ou butadiène-styrène-isoprène, cet ou ces élastomères, modifiés ou non, peuvent alors être présents de 1 à 70 parties en poids pour 100 parties d'élastomère diénique modifié selon l'invention. Plus particulièrement, cette matrice est uniquement constituée de cet élastomère diénique modifié selon la présente invention.

La composition de caoutchouc de l'invention comprend, outre au moins une matrice élastomère telle que décrit ci-dessus, au moins une charge renforçante. Cette charge renforçante peut être par exemple du noir de carbone, une charge inorganique renforçante telle que de la silice à laquelle est associé de manière connue un agent de couplage, ou encore un mélange de ces deux types de charge. Selon une variante de l'invention, la charge renforçante est de type siliceuse.

Les compositions de caoutchouc conformes à l'invention peuvent comporter également tout ou partie des additifs usuels habituellement utilisés dans les compositions d'élastomères destinées à la fabrication de pneumatiques, comme par exemple des pigments, des charges non renforçantes, des agents de protection tels que cires anti-ozone, anti-ozonants chimiques, anti-oxydants, des agents anti-fatigue, des agents plastifiants, des résines renforçantes ou plastifiantes, des accepteurs ou des donneurs de méthylène, un système de réticulation à base soit de soufre, soit de donneurs de soufre et/ou de peroxyde et/ou de bismaléimides, des accélérateurs de vulcanisation, des activateurs de vulcanisation.

L'invention a également pour objet un pneumatique qui incorpore dans au moins un de ses éléments constitutifs une composition de caoutchouc renforcée selon l'invention, et plus particulièrement des articles semi-finis d'un pneumatique qui comprennent cette composition, notamment la bande de roulement.

Les caractéristiques précitées de la présente invention, ainsi que d'autres, seront mieux comprises à la lecture de la description suivante de plusieurs exemples de réalisation de l'invention, donnés à titre illustratif et non limitatif.

## EXEMPLES DE PREPARATION DE L'ELASTOMERE

Mesures et tests utilisés

Techniques expérimentales utilisées pour la caractérisation avant cuisson des polymères obtenus :

(a) La technique SEC (Size Exclusion Chromatography) permet de séparer les macromolécules en solution suivant leur taille à travers des colonnes remplies d'un gel poreux. Les macromolécules sont séparées suivant leur volume hydrodynamique, les plus volumineuses étant éluées en premier.

Sans être une méthode absolue, la SEC permet d'appréhender la distribution des masses molaires d'un polymère. A partir de produits étalons commerciaux, les différentes masses molaires moyennes en nombre (Mn) et en poids (Mw) peuvent être déterminées et l'indice de polymolécularité (Ip = Mw/Mn) calculé via un étalonnage dit de MOORE.

Il n'y a pas de traitement particulier de l'échantillon de polymère avant analyse. Celui-ci est simplement solubilisé dans le solvant d'élution à une concentration d'environ 1 $g.L^{-1}$. Puis la solution est filtrée sur filtre de porosité 0,45μm avant injection.

L'appareillage utilisé est une chaîne chromatographique "WATERS alliance". Le solvant d'élution est soit le tétrahydrofurane, soit le tétrahydrofurane + 1%vol. de düsopropylamine + 1%vol. de triethylamine, le débit de 1 $mL.min^{-1}$, la température du système de 35° C et la durée d'analyse de 30 min. Un jeu de deux colonnes WATERS de dénomination commerciale "STYRAGEL HT6E" est utilisé. Le volume injecté de la solution de l'échantillon de polymère est 100 μL. Le détecteur est un réfractomètre différentiel "WATERS 2410" et le logiciel d'exploitation des données chromatographiques est le système "WATERS EMPOWER".

Les masses molaires moyennes calculées sont relatives à une courbe d'étalonnage réalisée pour des SBR de microstructure suivante : 25% massique de motifs type styrène, 23% massique de motifs type 1-2 et 50% massique de motifs type 1-4 trans.

**(b)** La technique de SEC haute résolution est utilisée pour déterminer les pourcentages massiques des différentes populations de chaînes présentes dans un échantillon de polymère.

Il n'y a pas de traitement particulier de l'échantillon de polymère avant analyse. Celui-ci est simplement solubilisé dans le solvant d'élution à une concentration d'environ 1 $g.L^{-1}$. Puis la solution est filtrée sur filtre de porosité 0,45 μm avant injection.

L'appareillage utilisé est une chaîne chromatographique "WATERS alliance 2695". Le solvant d'élution est le tétrahydrofurane, le débit de 0,2 $ml.min^{-1}$, la température du système de 35 °C. Un jeu de trois colonnes

identiques en série est utilisé (Shodex, longueur 300 mm, diamètre 8 mm). Le nombre de plateaux théoriques du jeu de colonnes est supérieur à 22 000. Le volume injecté de la solution de l'échantillon de polymère est 50 $\mu$L. Le détecteur est un réfractomètre différentiel "WATERS 2414" et le logiciel d'exploitation des données chromatographiques est le système "WATERS EMPOWER".

Les masses molaires calculées sont relatives à une courbe d'étalonnage réalisée pour des SBR de microstructure suivante : 25 % massique de motifs type styrène, 23 % massique de motifs type 1,2 et 50 % massique de motifs type 1,4-trans.

(c) Détermination des viscosités Mooney $ML_{(1+4)}$100°C pour les élastomères selon la norme ASTM D 1646.

Un consistomètre oscillant est utilisé tel que décrit dans la norme ASTM D-1646. La mesure de plasticité Mooney se fait selon le principe suivant : l'élastomère est moulé dans une enceinte cylindrique chauffée à 100 °C. Après une minute de préchauffage, le rotor tourne au sein de l'éprouvette à 2 tr.min$^{-1}$ et le couple utile pour entretenir ce mouvement après 4 minutes de rotation est mesuré. La plasticité Mooney ($ML_{(1+4)}$) est exprimée en "unité Mooney" (UM, avec 1 UM = 0,83 N.m).

(d) Détermination des températures de transition vitreuse (Tg) des élastomères au moyen d'un calorimètre différentiel ("differential scanning calorimeter").

(e) Détermination du taux de fonction $SiOCH_3$ par résonnance magnétique nucléaire (RMN).

Les analyses RMN sont réalisées sur un spectromètre 500 MHz BRUKER équipé d'une sonde "large bande" BBIz 5 mm. Pour l'expérience RMN $^1$H quantitative, la séquence utilise une impulsion 30° et un délai de répétition de 2 secondes. Les échantillons sont solubilisés dans le sulfure de carbone ($CS_2$). 100 $\mu$L de cyclohexane deutéré ($C_6D_{12}$) sont ajoutés pour le signal de lock.

(f) Caractérisation de la microstructure des élastomères par la technique de spectroscopie proche infrarouge (NIR).

La spectroscopie proche infrarouge (NIR) est utilisée pour déterminer quantitativement le taux massique de styrène dans l'élastomère ainsi que sa microstructure (répartition relative des unités butadiène 1,2, 1,4-trans et 1,4 cis). Le principe de la méthode repose sur la loi de Beer-Lambert généralisée à un système multicomposants. La méthode étant indirecte, elle fait appel à un étalonnage multivarié [Vilmin, F.; Dussap, C.; Coste, N. Applied Spectroscopy 2006, 60, 619-29] réalisé à l'aide d'élastomères étalons de composition déterminée par RMN $^{13}$C. Le taux de styrène et la microstructure sont alors calculés à partir du spectre NIR d'un film d'élastomère d'environ 730 $\mu$m d'épaisseur. L'acquisition du spectre est réalisée en mode transmission entre 4000 et 6200 cm$^{-1}$ avec une résolution de 2 cm$^{-1}$, à l'aide d'un spectromètre proche infrarouge à transformée de Fourier Bruker Tensor 37 équipé d'un détecteur InGaAs refroidi par effet Peltier.

(g) Détermination de la viscosité inhérente des élastomères à 25 °C à partir d'une solution d'élastomère à 0,1 g.dL$^{-1}$ dans le toluène, selon le principe suivant :

La viscosité inhérente est déterminée par la mesure du temps d'écoulement *t* de la solution de polymère et du temps d'écoulement $t_o$ du toluène, dans un tube capillaire.

Dans un tube Ubbelhode (diamètre du capillaire 0,46 mm, capacité 18 à 22 mL), placé dans un bain thermostaté à 25 $\pm$ 0,1 °C, le temps d'écoulement du toluène et celui de la solution polymère à 0,1 g.dL$^{-1}$ sont mesurés.

La viscosité inhérente est obtenue par la relation suivante :

$$\eta_{inh} = \frac{1}{C} \ln\left[\frac{(t)}{(t_o)}\right]$$

avec :

- **C** : concentration de la solution de polymère dans le toluène en g.dL$^{-1}$,
- ***t*** : temps d'écoulement de la solution de polymère dans le toluène en seconde,
- $t_o$ : temps d'écoulement du toluène en seconde,
- $\eta_{inh}$ : viscosité inhérente exprimée en dL.g$^{-1}$.

**Préparation du polymère A :** SBR couplé selon l'invention

Dans un réacteur de 90 litres, maintenu sous une pression d'azote d'environ 2 bars, contenant 44,7 kg de méthylcyclohexane, sont injectés 2,0 kg de styrène et 4,7 kg de butadiène ainsi que 354 mL d'une solution de tetrahydrofurfuryl ether à 0,0695 mol.L$^{-1}$ dans le méthylcyclohexane. Après neutralisation des impuretés dans la solution à polymériser par addition de n-butyllithium, sont ajoutés 1,3 L de n-butyllithium à 0,059 mol.L$^{-1}$ dans le méthylcyclohexane. La polymérisation est conduite à 40 °C.

Après 70 minutes, le taux de conversion des monomères atteint 90 %. Ce taux est déterminé par pesée d'un extrait séché à 140 °C, sous la pression réduite de 200 mmHg. Un échantillon témoin est alors prélevé

depuis le réacteur puis stoppé avec un excès de méthanol par rapport au lithium. La viscosité inhérente (viscosité "initiale"), laquelle est mesurée à 25 °C à 0,1 $g.dL^{-1}$ dans le toluène, est de 0,87 $dL.g^{-1}$. 743 mL d'une solution de 3-(N,N-diméthylaminopropyl)triméthoxysilane de numéro CAS [2530-86-1] à 0,0516 $mol.L^{-1}$ dans le méthylcyclohexane est ajoutée à la solution de polymère vivant. Après 10 minutes de réaction à 40 °C, une solution aqueuse d'acide chlorhydrique à 0,1 $mol.L^{-1}$ (2 éq. mol. HCl par rapport au n-butyllithium) est ajoutée et la solution est agitée pendant 30 minutes. La solution est ensuite antioxydée par addition de 0,8 partie pour cent parties d'élastomère (pce) de 4,4'-méthylène-bis-2,6-tert-butylphénol et de 0,2 partie pour cent parties d'élastomère (pce) de N-(1,3-diméthylbutyl)-N'-phényl-p-phénylènediamine. Le copolymère ainsi traité est séparé de sa solution par une opération de stripping à la vapeur d'eau, puis séché sur outils à cylindre à 100 °C pendant 15 minutes.

La viscosité inhérente "finale" mesurée est de 1,37 $dL.g^{-1}$. Le saut de viscosité, défini comme le rapport de ladite viscosité "finale" sur ladite viscosité "initiale", est ici de 1,57. La viscosité Mooney du polymère ainsi couplé est de 35.

La masse molaire moyenne en nombre, $M_n$, de ce copolymère, déterminée par la technique SEC, est de 190 000 $g.mol^{-1}$ et l'indice de polymolécularité, Ip, est de 1,07.

Le pourcentage massique d'espèces couplées, déterminé par la technique de SEC haute résolution, est de 80%.

La microstructure de ce copolymère est déterminée par la méthode NIR : le taux massique de motifs 1,4-trans est de 23 %, celui de motifs 1,4-cis est de 20 % et celui de motifs 1,2 est de 57 %, chacun de ces trois taux se rapportant aux unités butadiène. Le taux massique de styrène est de 27%.

La température de transition vitreuse de ce copolymère est de - 24 °C.

Le taux de fonction $SiOCH_3$ résiduel après hydrolyse/stripping/séchage, déterminé par RMN $^1H$, est nul.

**Préparation du polymère B :** SBR fonctionnel en extrémité de chaîne non conforme à l'invention

Dans un réacteur de 90 litres, maintenu sous une pression d'azote d'environ 2 bars, contenant 45,3 kg de méthylcyclohexane, sont injectés 2,0 kg de styrène et 4,7 kg de butadiène ainsi que 354 mL d'une solution de tetrahydrofurfuryl ether à 0,0695 $mol.L^{-1}$ dans le méthylcyclohexane. Après neutralisation des impuretés dans la solution à polymériser par addition de n-butyllithium, sont ajoutés 644 mL de n-butyllithium à 0,059 $mol.L^{-1}$ dans le méthylcyclohexane. La polymérisation est conduite à 40 °C.

Après 70 minutes, le taux de conversion des monomères atteint 90 %. Ce taux est déterminé par pesée d'un extrait séché à 140 °C, sous la pression réduite de 200 mmHg. Un échantillon témoin est alors prélevé depuis le réacteur puis stoppé avec un excès de méthanol par rapport au lithium. La viscosité inhérente (viscosité "initiale"), laquelle est mesurée à 25 °C à 0,1 $g.dL^{-1}$ dans le toluène, est de 1,40 $dL.g^{-1}$. 737 mL d'une solution de 3-(N,N-diméthylaminopropyl)triméthoxysilane de numéro CAS [2530-86-1] à 0,0516 $mol.L^{-1}$ dans le méthylcyclohexane est ajoutée à la solution de polymère vivant. Après 1 minutes de réaction à 40 °C, une solution aqueuse d'acide chlorhydrique à 0,1 $mol.L^{-1}$ (2 éq. mol. HCl par rapport au n-butyllithium) est ajoutée et la solution est agitée pendant 30 minutes. La solution est ensuite antioxydée par addition de 0,8 partie pour cent parties d'élastomère (pce) de 4,4'-méthylène-bis-2,6-tert-butylphénol et de 0,2 partie pour cent parties d'élastomère (pce) de N-(1,3-diméthylbutyl)-N'-phényl-p-phénylènediamine. Le copolymère ainsi traité est séparé de sa solution par une opération de stripping à la vapeur d'eau, puis séché sur outils à cylindre à 100 °C pendant 15 minutes.

La viscosité inhérente "finale" mesurée est de 1,58 $dL.g^{-1}$. Le saut de viscosité, défini comme le rapport de ladite viscosité "finale" sur ladite viscosité "initiale", est ici de 1,13. La viscosité Mooney du polymère ainsi fonctionnalisé est de 72.

La masse molaire moyenne en nombre, $M_n$, de ce copolymère, déterminée par la technique SEC, est de 245 000 $g.mol^{-1}$ et l'indice de polymolécularité, Ip, est de 1,20.

Le pourcentage massique d'espèces fonctionnalisées en extrémité de chaîne, déterminé par la technique de SEC haute résolution, est de 65%.

La microstructure de ce copolymère est déterminée par la méthode NIR : le taux massique de motifs 1,4-trans est de 22 %, celui de motifs 1,4-cis est de 19 % et celui de motifs 1,2 est de 59 %, chacun de ces trois taux se rapportant aux unités butadiène. Le taux massique de styrène est de 28%.

La température de transition vitreuse de ce copolymère est de - 23 °C.

Le taux de fonction $SiOCH_3$ résiduel après hydrolyse/stripping/séchage, déterminé par RMN $^1H$, est nul.

L'évolution de la viscosité Mooney au cours du temps de ces polymères été évaluée lors d'un stockage dans des conditions usuelles de stockage.

Des échantillons de polymères A et B ont été enveloppés sous film de polyéthylène perméable à l'air et stockés à une température de 25 °C, à pression atmosphérique et à l'abri de la lumière.

Des mesures de la viscosité Mooney de ces échantillons ont été effectuées à intervalles de temps tels qu'ils apparaissent dans le tableau 1 ci-dessous.

Les résultats sont consignés dans le tableau 1 ci-dessous.

Tableau 1 :

| Temps (j) | $ML_{(1+4)}100°C$ | |
|---|---|---|
| | Polymère A | Polymère B |
| 0 | 35 | 72 |
| 4 | 35 | 85 |
| 7 | 35 | 85 |
| 11 | 35 | 92 |
| 15 | 35 | 98 |
| 19 | 35 | / |
| 30 | 35 | / |
| 61 | 35 | / |
| 130 | 35 | / |

Dans le tableau, "/" signifie qu'aucune mesure de Mooney n'a été réalisée (valeurs mesurées peu fiables au-delà de 100).

On constate que le polymère A, élastomère diénique modifié selon l'invention comprenant majoritairement l'espèce couplé par un groupement porteur de la fonction silanol et de la fonction amine, ne subit aucune évolution de la viscosité Mooney lors de la période de stockage s'étalant sur 130 jours, contrairement à l'élastomère témoin modifié avec le même agent de fonctonnalisation, mais comprenant majoritairement l'espèce fonctionnalisée en bout de chaîne portant le groupement porteur de la fonction silanol et de la fonction amine, en extrémité de chaîne.

## Revendications

1. Elastomère diénique modifié comprenant l'espèce couplée par un groupement porteur d'une fonction comprenant un atome de silicium majoritairement hydrolysée en silanol et d'une fonction amine tertiaire, lié à l'élastomère diénique par l'intermédiaire de l'atome de silicium, en une fraction pondérale par rapport au poids total de l'élastomère diénique modifié, qui est la plus élevée des fractions pondérales des différentes espèces constituant l'élastomère diénique modifié.

2. Elastomère diénique modifié selon la revendication 1, **caractérisé en ce que** l'espèce couplée de l'élastomère est représentée par la formule (1)

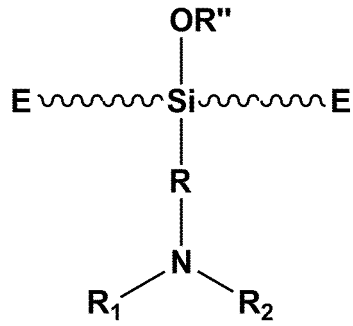

Formule 1

dans laquelle,

- le symbole E désigne un élastomère diénique,
- R est un groupement hydrocarboné divalent, linéaire ou ramifié, alkylène en $C_1$ - $C_{10}$, arylène en $C_6$ - $C_{18}$ ou aralkylène en $C_7$ - $C_{18}$,
- $R_1$ et $R_2$, identiques ou différents, représentent un radical alkyl en $C_1$-$C_{18}$, ou alors $R_1$ et $R_2$ forment avec N auquel ils sont liés un hétérocycle contenant un atome d'azote et au moins un atome de carbone,
- -OR" représente une fonction alcoxy, hydrolysée à au moins 50%, de préférence au moins 80%, plus préférentiellement 100%, le radical alkyl comprenant 1 à 5 atomes de carbone, de préférence 1 ou 2.

3. Elastomère diénique modifié selon la revendication 1 ou 2, **caractérisé en ce que** l'espèce couplée de l'élastomère est représentée par la formule (1b)

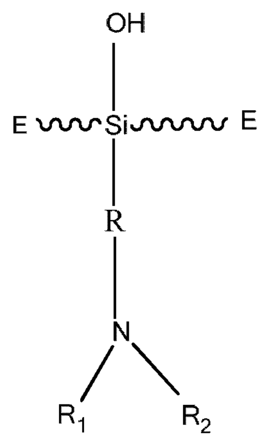

Formule 1b

dans laquelle,

- le symbole E désigne un élastomère diénique,
- R est un groupement hydrocarboné divalent, linéaire ou ramifié, alkylène en $C_1$ - $C_{10}$, arylène en $C_6$ - $C_{18}$ ou aralkylène en $C_7$ - $C_{18}$,
- $R_1$ et $R_2$, identiques ou différents, représentent un radical alkyl en $C_1$- $C_{18}$, ou alors $R_1$ et $R_2$ forment avec N auquel ils sont liés un hétérocycle contenant un atome d'azote et au moins un atome de carbone,

**4.** Elastomère diénique modifié selon la revendication 2 ou 3, **caractérisé en ce que** dans la formule (I), R représente le radical alkyle linéaire en C3.

**5.** Elastomère diénique modifié selon l'une quelconque des revendications 2 à 4, **caractérisé en ce que** dans la formule (I), $R_1$ et $R_2$, identiques ou différents, représentent un radical méthyle ou éthyle, de préférence méthyle.

**6.** Elastomère diénique modifié selon l'une quelconque des revendications 1 à 5, **caractérisé en ce que** l'élastomère diénique modifié est un copolymère de butadiène et d'un monomère vinylaromatique, notamment un SBR.

**7.** Procédé de synthèse d'un élastomère diénique modifié comprenant les étapes:

- polymérisation anionique d'au moins un monomère diène conjugué en présence d'un initiateur de polymérisation,
- modification de l'élastomère diénique vivant porteur d'un site actif obtenu à l'étape précédente par un agent de fonctionnalisation porteur d'au moins une fonction hydrolysable en silanol et deux fonctions réactives avec l'élastomère vivant, chacune directement liée à l'atome de silicium, ainsi qu'une fonction amine tertiaire, avec un rapport molaire de l'agent de fonctionnalisation à l'initiateur de polymérisation d'une valeur allant de 0,35 et 0,65,
- l'hydrolyse de l'élastomère modifié obtenu à l'étape précédente.

**8.** Procédé de synthèse d'un élastomère diénique modifié selon la revendication 7 **caractérisé en ce que** l'agent de fonctionnalisation est un composé porteur d'un groupement de type $-Si(OR)_3$, R étant un radical alkyle hydrolysable en $C_1$-$C_5$, préférentiellement en $C_1$-$C_2$, et d'une fonction amine tertiaire.

**9.** Procédé de synthèse d'un élastomère diénique modifié selon la revendication 7 **caractérisé en ce que** l'agent de fonctionnalisation est un composé porteur d'un groupement $-SiX_3$, X désignant un halogène, plus particulièrement Cl, et d'une fonction amine tertiaire.

**10.** Procédé de synthèse d'un élastomère diénique modifié selon la revendication 7 ou 8, **caractérisé en ce que** l'agent de fonctionnalisation est représenté par la formule 2:

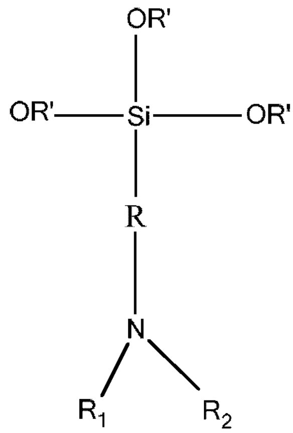

Formule 2

dans laquelle,

- R est un groupement hydrocarboné divalent, linéaire ou ramifié, alkylène en $C_1$ - $C_{10}$, arylène en $C_6$ - $C_{18}$ ou aralkylène en $C_7$ - $C_{18}$,
- $R_1$ et $R_2$, identiques ou différents, représentent un radical alkyl en $C_1$- $C_{18}$, ou alors $R_1$ et $R_2$ forment avec N auquel ils sont liés un hétérocycle contenant un atome d'azote et au moins un atome de carbone,
- les radicaux R', substitués ou non substitués, identiques ou différents entre eux, représentent un groupe alkyle en $C_1$-$C_5$, de préférence un groupe alkyle en $C_1$-$C_2$.

**11.** Procédé de synthèse d'un élastomère diénique modifié selon l'une quelconque des revendications 7 à 10, **caractérisé en ce que** l'étape d'hydrolyse est mise en oeuvre par l'addition d'une solution aqueuse d'acide chlorhydrique.

**12.** Composition de caoutchouc renforcée, réticulable ou réticulée, à base d'au moins une charge renforçante et une matrice élastomère comprenant au moins un élastomère diénique modifié tel que défini dans l'une quelconque des revendications 1 à 6.

**13.** Composition de caoutchouc renforcée selon la revendication 12, **caractérisée en ce que** la charge renforçante comprend une charge inorganique renforçante de type siliceuse.

**14.** Bande de roulement de pneumatique, **caractérisée en ce qu'**elle comprend une composition de caoutchouc réticulable ou réticulée selon la revendication 12 ou 13.

**15.** Pneumatique, **caractérisé en ce qu'**il comporte une bande de roulement selon la revendication 14.

## Patentansprüche

1. Modifiziertes Dien-Elastomer, das die Spezies umfasst, welche über eine Gruppe gekuppelt ist, die mit einer Funktion versehen ist, welche ein Siliciumatom umfasst und überwiegend zu Silanol hydrolysiert ist, sowie mit einer tertiären Aminfunktion, wobei die Gruppe über das Siliciumatom an das Dien-Elastomer gebunden ist und der Gewichtsanteil der Spezies der höchste der Gewichtsanteile der verschiedenen Spezies ist, aus welchen das modifizierte Dien-Elastomer besteht, bezogen auf das Gesamtgewicht des Dien-Elastomers.

2. Modifiziertes Dien-Elastomer nach Anspruch 1, **dadurch gekennzeichnet, dass** die gekuppelte Spezies des Elastomers der Formel (1) entspricht

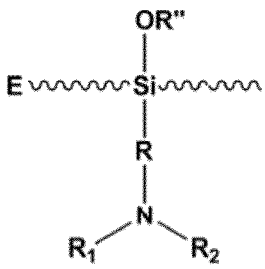

Formel 1

wobei

- das Formelzeichen E ein Dien-Elastomer bezeichnet,
- R für eine zweibindige, geradkettige oder verzweigte, Kohlenwasserstoffgruppe der Art $C_1$-$C_{10}$-Alkylen, $C_6$-$C_{18}$-Arylen oder $C_7$-$C_{18}$-Aralkylen steht,
- $R_1$ und $R_2$, die gleichartig oder verschiedenartig sind, für einen $C_1$-$C_{18}$-Alkylrest stehen, oder aber $R_1$ und $R_2$ mit dem N, an welches die gebunden sind, eine heterozyklische Verbindung bilden, die ein Stickstoffatom und mindestens ein Kohlenstoffatom enthält,
- -OR" für eine Alkoxyfunktion steht, die zu mindestens 50 %, vorzugsweise zu mindestens 80 %, mit größerem Vorzug zu 100 % hydrolysiert ist, wobei der Alkylrest 1 bis 5 Kohlenstoffatome, vorzugsweise 1 oder 2, umfasst.

3. Modifiziertes Dien-Elastomer nach Anspruch 1 oder 2, **dadurch gekennzeichnet, dass** die gekuppelte Spezies des Elastomers der Formel (1b) entspricht

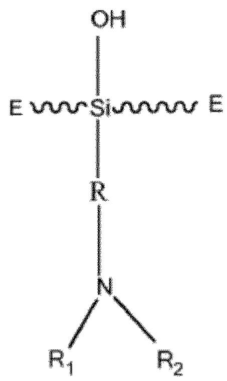

Formel 1b

wobei

- das Formelzeichen E ein Dien-Elastomer bezeichnet,
- R für eine zweibindige, geradkettige oder verzweigte, Kohlenwasserstoffgruppe der Art $C_1$-$C_{10}$-Alkylen, $C_6$-$C_{18}$-Arylen oder $C_7$-$C_{18}$-Aralkylen steht,
- $R_1$ und $R_2$, die gleichartig oder verschiedenartig sind, für einen $C_1$-$C_{18}$-Alkylrest stehen, oder aber $R_1$ und $R_2$ mit dem N, an welches die gebunden sind, eine heterozyklische Verbindung bilden, die ein Stickstoffatom und mindestens ein Kohlenstoffatom enthält.

4. Modifiziertes Dien-Elastomer nach Anspruch 2 oder 3, **dadurch gekennzeichnet, dass** R in der Formel (I) gleich dem geradkettigen $C_3$-Alkylrest ist.

5. Modifiziertes Dien-Elastomer nach einem beliebigen der Ansprüche 2 bis 4, **dadurch gekennzeichnet, dass** $R_1$ und $R_2$, die gleichartig oder verschiedenartig sind, in der Formel (I) für einen Methyl- oder Ethylrest, vorzugsweise für Methyl, stehen.

6. Modifiziertes Dien-Elastomer nach einem beliebigen der Ansprüche 1 bis 5, **dadurch gekennzeichnet, dass** es sich bei dem modifizierten Dien-Elastomer um ein Copolymer aus Butadien und einem vinylaromatischen Monomer handelt, insbesondere um SBR.

7. Verfahren zur Synthese eines modifizierten Dien-Elastomers, wobei es die folgenden Schritte umfasst:

- anionische Polymerisation mindestens eines konjugierten Dien-Monomers in Gegenwart eines Polymerisationsinitiators,
- Modifizierung des lebenden Dien-Elastomers, das mit einer aktiven Stelle versehen ist, welche im vorhergehenden Schritt erhalten wurde, durch ein Mittel zur Einführung funktioneller

Gruppen, das mit mindestens einer zu Silanol hydrolysierbaren Funktion und mit zwei Funktionen versehen ist, die mit dem lebenden Elastomer reaktionsfähig sind, wobei diese jeweils direkt an das Siliciumatom gebunden sind, sowie mit einer tertiären Aminfunktion, wobei das Molverhältnis zwischen dem Mittel zum Einführen funktioneller Gruppen und dem Polymerisationsinitiator im Bereich eines Wertes von 0,35 bis 0,65 liegt,

- Hydrolyse des modifizierten Elastomers, das im vorhergehenden Schritt erhalten wurde.

**8.** Verfahren zur Synthese eines modifizierten Dien-Elastomers nach Anspruch 7, **dadurch gekennzeichnet, dass** es sich bei dem Mittel zur Einführung funktioneller Gruppen um eine Verbindung handelt, die mit einer Gruppe des Typs -Si(OR)$_3$ versehen ist, wobei R ein hydrolysierbares $C_1$-$C_5$-, vorzugsweise $C_1$-$C_2$-Alkylradikal ist, und mit einer tertiären Aminfunktion.

**9.** Verfahren zur Synthese eines modifizierten Dien-Elastomers nach Anspruch 7, **dadurch gekennzeichnet, dass** es sich bei dem Mittel zur Einführung funktioneller Gruppen um eine Verbindung handelt, die mit einer $SiX_3$-Gruppe versehen ist, wobei X für ein Halogen, insbesondere für Cl steht, und mit einer tertiären Aminfunktion.

**10.** Verfahren zur Synthese eines modifizierten Dien-Elastomers nach Anspruch 7 oder 8, **dadurch gekennzeichnet, dass** das Mittel zur Einführung funktioneller Gruppe der Formel 2 entspricht:

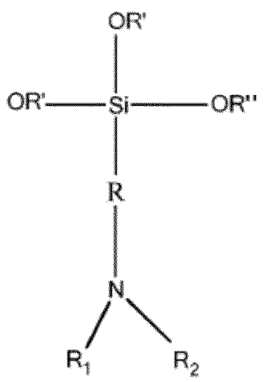

Formel 2

wobei

- R für eine zweibindige, geradkettige oder verzweigte, Kohlenwasserstoffgruppe der Art $C_1$-$C_{10}$-Alkylen, $C_6$-$C_{18}$-Arylen oder $C_7$-$C_{18}$-Aralkylen steht,

- $R_1$ und $R_2$, die gleichartig oder verschiedenartig sind, für einen $C_1$-$C_{18}$-Alkylrest stehen, oder aber $R_1$ und $R_2$ mit dem N, an welches die gebunden sind, eine heterozyklische Verbindung bilden, die ein Stickstoffatom und mindestens ein Kohlenstoffatom enthält.

- die Reste R', welche substituiert oder unsubstituiert sowie untereinander gleichartig oder verschiedenartig sein können, für eine $C_1$-$C_5$-Alkylgruppe, vorzugsweise eine $C_1$-$C_2$-Alkylgruppe, stehen.

**11.** Verfahren zur Synthese eines modifizierten Dien-Elastomers nach einem beliebigen der Ansprüche 7 bis 10, **dadurch gekennzeichnet, dass** der Hydrolyseschritt durchgeführt wird, indem eine wässrige Lösung von Salzsäure zugesetzt wird.

**12.** Verstärkte Kautschukzusammensetzung, die vernetzbar oder vernetzt ist, auf Basis mindestens eines verstärkenden Füllstoffs und einer Elastomermatrix, welche mindestens ein modifiziertes Dien-Elastomer gemäß der Begriffsbestimmung in einem beliebigen der Ansprüche 1 bis 6 umfasst.

**13.** Verstärkte Kautschukzusammensetzung nach Anspruch 12, **dadurch gekennzeichnet, dass** der verstärkende Füllstoff einen verstärkenden anorganischen Füllstoff von siliciumdioxidartiger Beschaffenheit umfasst.

**14.** Reifenlauffläche, **dadurch gekennzeichnet, dass** sie eine vernetzbare oder vernetzte Kautschukzusammensetzung nach Anspruch 12 oder 13 umfasst.

**15.** Luftreifen, **dadurch gekennzeichnet, dass** er eine Lauffläche nach Anspruch 14 aufweist.

## Claims

**1.** Modified diene elastomer comprising the species coupled via a group bearing a function comprising a silicon atom predominantly hydrolysed into silanol and a tertiary amine function, linked to the diene elastomer via the silicon atom, as a weight fraction relative to the total weight of the modified diene elastomer, which is the highest of the weight fractions of the various species constituting the modified diene elastomer.

**2.** Modified diene elastomer according to Claim 1, **characterized in that** the coupled species of the elastomer is represented by formula (1)

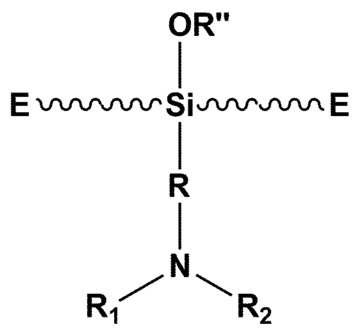

Formula 1

in which:

- the symbol E denotes a diene elastomer,
- R is a linear or branched $C_1$ - $C_{10}$ alkylene, $C_6$ - $C_{18}$ arylene or $C_7$ - $C_{18}$ aralkylene divalent hydrocarbon-based group,
- $R_1$ and $R_2$, which may be identical or different, represent a $C_1$-$C_{18}$ alkyl radical, or else $R_1$ and $R_2$ form, with N to which they are attached, a heterocycle containing a nitrogen atom and at least one carbon atom,
- -OR" represents an alkoxy function, hydrolysed to at least 50%, preferably at least 80%, more preferentially 100%, the alkyl radical comprising 1 to 5 and preferably 1 or 2 carbon atoms.

**3.** Modified diene elastomer according to Claim 1 or 2, **characterized in that** the coupled species of the elastomer is represented by formula (1b)

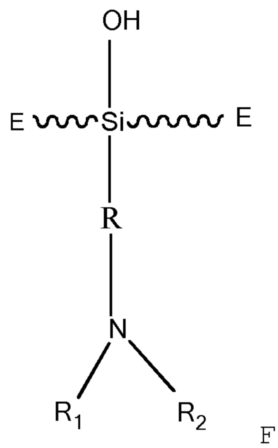

Formula 1b

in which:

- the symbol E denotes a diene elastomer,
- R is a linear or branched $C_1$ - $C_{10}$ alkylene, $C_6$ - $C_{18}$ arylene or $C_7$ - $C_{18}$ aralkylene divalent hydrocarbon-based group,
- $R_1$ and $R_2$, which may be identical or different, represent a $C_1$-$C_{18}$ alkyl radical, or else $R_1$ and $R_2$ form, with N to which they are attached, a heterocycle containing a nitrogen atom and at least one carbon atom.

**4.** Modified diene elastomer according to Claim 2 or 3, **characterized in that**, in formula (I), R represents the linear C3 alkyl radical.

**5.** Modified diene elastomer according to any one of Claims 2 to 4, **characterized in that**, in formula (I), $R_1$ and $R_2$, which may be identical or different, represent a methyl or ethyl radical, preferably methyl.

**6.** Modified diene elastomer according to any one of Claims 1 to 5, **characterized in that** the modified diene elastomer is a copolymer of butadiene and of a vinylaromatic monomer, especially an SBR.

**7.** Process for synthesizing a modified diene elastomer, comprising the following steps:

- anionic polymerization of at least one conjugated diene monomer in the presence of a polymerization initiator,
- modification of the living diene elastomer bearing an active site obtained in the preceding step with a functionalization agent bearing at least one function that is hydrolysable into silanol and two functions that are reactive with the living elastomer, each directly linked to the silicon atom, and also a tertiary amine function, with a mole ratio of the functionalization agent to the polymerization initiator having a value ranging from 0.35 to 0.65,
- hydrolysis of the modified elastomer obtained in the preceding step.

**8.** Process for synthesizing a modified diene elastomer according to Claim 7, **characterized in that** the functionalization agent is a compound bearing a group of the type $-Si(OR)_3$, R being a hydrolysable $C_1$-$C_5$ and preferentially $C_1$-$C_2$ alkyl radical, and a tertiary amine function.

**9.** Process for synthesizing a modified diene elastomer according to Claim 7, **characterized in that** the functionalization agent is a compound bearing a group $-SiX_3$, X denoting a halogen, more particularly Cl, and a tertiary amine function.

**10.** Process for synthesizing a modified diene elastomer according to Claim 7 or 8, **characterized in that** the functionalization agent is represented by formula 2:

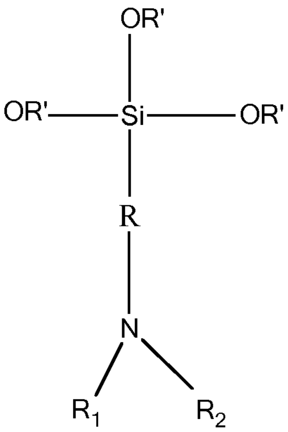

Formula 2

in which:

- R is a linear or branched $C_1$ - $C_{10}$ alkylene, $C_6$ - $C_{18}$ arylene or $C_7$ - $C_{18}$ aralkylene divalent hydrocarbon-based group,
- $R_1$ and $R_2$, which may be identical or different, represent a $C_1$-$C_{18}$ alkyl radical, or else $R_1$ and $R_2$ form, with N to which they are attached, a heterocycle containing a nitrogen atom and at least one carbon atom,
- the substituted or unsubstituted radicals R', which may be identical to or different from each other, represent a $C_1$-$C_5$ alkyl group, preferably a $C_1$-$C_2$ alkyl group.

**11.** Process for synthesizing a modified diene elastomer according to any one of Claims 7 to 10, **characterized in that** the hydrolysis step is performed by adding an aqueous hydrochloric acid solution.

**12.** Crosslinkable or crosslinked reinforced rubber composition based on at least one reinforcing filler and an elastomer matrix comprising at least one modified diene elastomer as defined in any one of Claims 1 to 6.

**13.** Reinforced rubber composition according to Claim 12, **characterized in that** the reinforcing filler comprises a reinforcing mineral filler of siliceous type.

**14.** Tyre tread, **characterized in that** it comprises a crosslinkable or crosslinked rubber composition according to Claim 12 or 13.

**15.** Tyre, **characterized in that** it comprises a tread according to Claim 14.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- EP 0778311 A1
- EP 0786493 A1
- EP 0877047 A1
- EP 2139703 A
- WO 2009077837 A1
- EP 2266819 A1
- EP 0801078 B1
- EP 1198506 B1
- EP 1237934 B1


### Littérature non-brevet citée dans la description


- **VILMIN, F. ; DUSSAP, C. ; COSTE, N.** *Applied Spectroscopy,* 2006, vol. 60, 619-29